## Europäisches Patentamt

## European Patent Office

## Office européen des brevets

(11) Numéro de publication: **0 086 144**
**B1**

(12) # FASCICULE DE BREVET EUROPÉEN

(45) Date de publication du fascicule du brevet:
**03.09.86**

(51) Int. Cl.⁴: **B 05 B 11/00**

(21) Numéro de dépôt: **83400211.5**

(22) Date de dépôt: **01.02.83**

(54) **Dispositif de projection de doses précises d'aérosol.**

(30) Priorité: **05.02.82 FR 8201846**

(43) Date de publication de la demande:
**17.08.83 Bulletin 83/33**

(45) Mention de la délivrance du brevet:
**03.09.86 Bulletin 86/36**

(84) Etats contractants désignés:
**AT BE CH DE FR GB IT LI LU NL SE**

(56) Documents cité:
**FR-A-1 441 127**
**FR-A-2 393 278**
**FR-A-2 447 473**

(73) Titulaire: **ETABLISSEMENTS VALOIS Société Anonyme dite:, Boîte Postale G Le Prieuré, F-27110 Le Neubourg (FR)**

(72) Inventeur: **Brunet, Michel, 7, rue de la Marnière Carrée, F-27840 Sainte Colombe La Commanderie (FR)**

(74) Mandataire: **Pinguet, André, CAPRI 28 bis, avenue Mozart, F-75016 Paris (FR)**

## Description

La présente invention a trait à un dispositif de projection de doses précises d'aérosol, du type comportant une pompe à piston, et dans lequel une pression de gaz est maintenue dans le récipient contenant le produit liquide à atomiser, pour assurer le remplissage complet de la pompe avant chaque déplacement du piston, ou assurer une atmosphère neutre.

On connait déjà ce type de dispositif appelé valve-pompe qui présente divers avantages, tant vis-à-vis des dispositifs dits valves doseuses que des pompes à actionnement manuel.

Par rapport aux valves doseuses, une valve-pompe fournit des doses exactes, toujours de même mesure, jusqu'à épuisement du récipient qu'elle équipe, parce que la course du piston est constante et parce que la pression de gaz résiduelle est suffisante, jusqu'à épuisement du flacon pour assurer un remplissage complet de la pompe.

Par rapport aux pompes, une valve-pompe fournit toujours une dose exacte pour la même raison que ci-dessus et, en outre, on évite l'introduction d'air, donc d'oxygène dans le récipient, ce qui évite l'oxydation et la contamination du produit contenu, par un choix approprié du gaz de compression.

Un des problèmes rencontrés dans ce type de valve-pompe est dû aux clapets, qui gênent le remplissage libre de la pompe et qui, en outre, ont parfois une étanchéité défectueuse, du fait de la présence de corps étrangers sur le siège de clapet, ou du fait du siège lui-même qui, en pratique, est venu de moulage avec le reste du corps de valve et ne peut être usiné pour des raisons d'économie. En fait, jusqu'à maintenant, aucun dispositif de ce type n'a été utilisé en pratique à une échelle commerciale.

Un autre problème rencontré dans ce type de valve-pompe (décrit par exemple dans le FR-A-1 441 127 du 13/07/65 de P. Meshberg), est lié au clapet de sortie du produit dont la fermeture en fin d'expulsion n'est pas assurée ou tout au moins pas immédiatement. La tige de commande en remontant commence par aspirer de l'air, et peut en outre entrainer le piston dans sa course ascendante. La chambre de compression se remplit d'air, le dispositif ne fonctionne pas ou la dose est imprécise, réduite et le produit est contaminé.

Conformément à la présente invention, un dispositif de projection de doses précises d'un produit liquide, notamment un produit liquide à atomiser pour former un aérosol du type comportant une pompe à piston prévue pour être montée sur un récipient pressurisé, en vue de recevoir un volume du liquide à atomiser et une charge de gaz suffisante pour occuper tout le volume du récipient avec une pression supérieure à la pression atmosphérique, comportant un corps de valve contenant une chambre de dosage cylindrique dans laquelle est logé un piston monté à mouvement perdu sur une tige de soupape, un bouton-poussoir d'actionnement du dispositif monté sur la tige de soupape traversant de part en part la chambre doseuse, et comprenant un épaulement, formé sur la tige, qui sert à entraîner le piston, l'extrémité interne de la soupape étant formée avec un rêtreint passant dans l'ouverture centrale de la chambre, de façon que pour une position relevée de la soupape, l'ouverture ne soit pas obturée et pour une position abaissée de la soupape l'ouverture soit fermée de façon étanche, l'extrémité externe de la soupape étant creuse sur une certaine longueur de façon à former un canal axial borgne, communiquant avec la chambre de dosage par un passage radial situé à un niveau tel que ce passage soit obturé par le piston pour une position abaissée du piston et dégagé pour une position haute du piston, le déplacement du piston nécessaire pour dégager le passage étant supérieur au déplacement de la tige nécessaire pour obturer le fond de la chambre, est remarquable notamment en ce qu'un ressort est prévu entre le piston et un épaulement formé sur la tige, le ressort repoussant le piston en position d'obturation du passage radial.

Une forme de réalisation de l'invention apparaîtra au cours de la description qui va suivre, donnée à titre d'exemple non limitatif en regard des dessins ci-joints, et qui fera bien comprendre comment l'invention peut être réalisée.

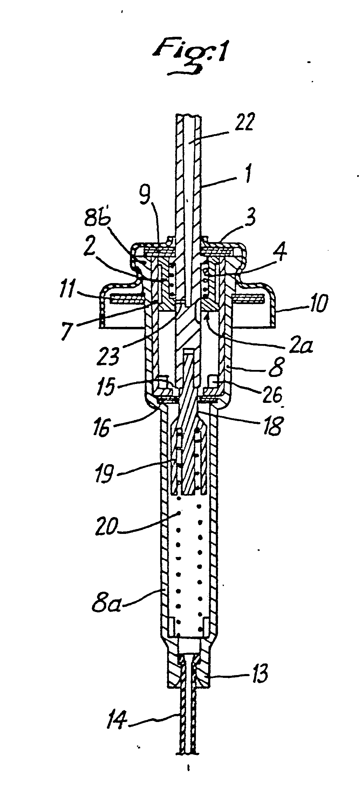

- La figure 1 représente une vue en coupe d'un mode de réalisation de l'invention, à l'état de repos;
- La figure 2, une vue du même dispositif en fin de course d'utilisation; et,
- La figure 3 une vue analogue en position de remplissage.

Le dispositif selon l'invention est prévu pour être monté de façon étanche sur un récipient, destiné à recevoir un liquide, en laissant dégagée une partie du volume intérieur pour recevoir une charge de gaz. La quantité de gaz doit être suffisante pour qu'il reste une pression résiduelle quand le liquide est extrait en totalité du récipient. Le gaz peut être quelconque. Il est choisi en fonction du liquide à atomiser. De préférence, il ne sera pas soluble dans le liquide, et il ne réagira pas avec lui. En général, on ne choisira pas l'air, pour éviter l'oxydation. L'azote ou le gaz carbonique sont fréquemment utilisés.

Le dispositif selon l'invention comporte une tige de soupape cylindrique 1 sur laquelle est monté à mouvement perdu un piston 2. A cet effet, la soupape 1 comporte une surépaisseur 3 contre laquelle prend appui un ressort 4, dont l'autre extrémité prend appui dans le fond creux du piston 2. A l'état de repos, c'est-à-dire quand le dispositif est monté sur un flacon, il règne à l'intérieur du flacon une certaine pression à laquelle est exposé le piston. Dans cette position, le ressort est peu ou pas comprimé, le piston étant appliqué contre le joint 9. Le piston est monté de façon à coulisser avec étanchéité dans une chambre doseuse 7, laquelle peut constituer une pièce indépendante, ou comme dans le cas présent être logée dans un corps de valve 8. Celui-ci est prévu avec un bourrelet 8b à l'extrémité extérieure, de façon à pouvoir être serti avec un joint annulaire 8 dans une capsule 10. Un autre joint 11 est prévu contre un épaulement du corps de valve pour assurer le montage étanche de l'ensemble sur un flacon. La tige de soupape peut coulisser avec étanchéïté dans l'ouverture centrale du joint 9. Le corps de valve présente à l'extrémité intérieure un prolongement creux 8a, s'étendant au-delà de la chambre doseuse 7. Ce prolongement est de préférence plus mince et se termine par un embout 13 auquel est raccordé de façon classique un tube plongeur 14 s'étendant jusqu'au fond du récipient sur lequel est monté le dispositif. Le fond de la chambre doseuse comporte un orifice 15 d'un diamètre suffisant pour laisser passer la tige de soupape 1. Entre le fond de la chambre doseuse et un épaulement du corps de valve est logé un joint annulaire 18, dont l'ouverture centrale est prévue pour recevoir en glissement étanche la partie inférieure de la tige de soupape 1. Quand la tige de soupape est en position de repos, la tige de soupape présente un rétreint 18 au niveau du joint 16, de façon à laisser passer les fluides sans restriction notable.

Conformément à une disposition connue (FR-A-1 287 373 à M. L. Guillou, du 22/11/80), ce rétreint peut avoir une section différente du cercle, de façon que le joint circulaire en caoutchouc ne puisse, même en cas de gonflement, arriver à obturer complètement le passage existant normalement entre la soupape et le joint.

Avantageusement, le rétreint 18 est obtenu par une pièce distincte 19 ou bas de soupape emmanchée ou fixée de toute façon appropriée dans l'extrémité de la soupape 1. Le bas de soupape sert également à assurer le guidage de la soupape, le long du prolongement 8a du corps de valve, tout en laissant passer les fluides sans obstruction. Un ressort 20 prend appui par une extrémité à l'intérieur du bas de soupape et par l'autre extrémité contre un épaulement approprié au fond du prolongement 8a du corps de valve, de façon à rappeler la soupape vers le haut (ou vers l'intérieur), la surépaisseur 3 venant en butée contre le joint 9 qui est lui-même maintenu appliqué contre la capsule 10.

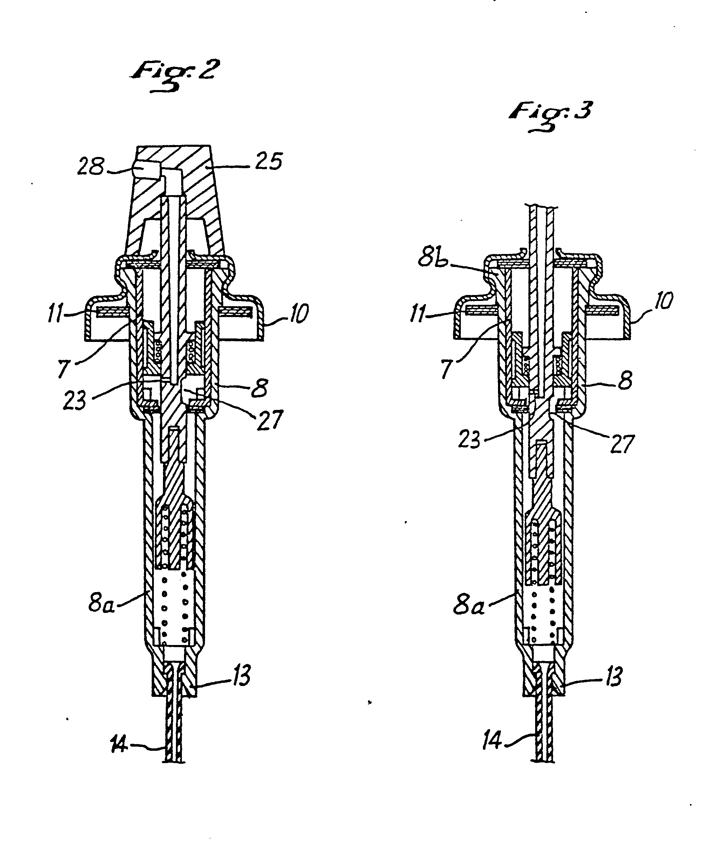

La soupape 1 est creuse sur une certaine distance à partir de l'extérieur, ce qui ménage un canal central 22. Un passage radial 23 fait communiquer le fond du canal central 22 avec l'extérieur de la tige de soupape, à l'intérieur de la chambre de dosage. Ce passage est situé à un niveau tel que dans l'état de repos représenté sur le dessin, il débouche au niveau du piston 2, et est obturé par celui-ci; et à une faible distance de la face interne 2a de ce piston, de façon à pouvoir être dégagé par un déplacement du piston contre la force du ressort 4. Mais, cette distance est toutefois supérieure au déplacement nécessaire à la tige 1 pour venir obturer le trou 15 de façon étanche. Enfin, la tige de soupape est coiffée de façon classique, d'un bouton poussoir (25, Fig. 2) comportant un gicleur de pulvérisation 28.

Dans une variante de l'invention, on peut prévoir au moins une rainure 27 ou une gorge, creusée dans la tige de soupape 1, à un niveau tel qu'en fin de course descendante, cette rainure se place au niveau du joint 16, au fond de la chambre et s'étende vers le haut et vers le bas au-delà du joint, de façon à mettre la chambre de dosage 7 en communication avec l'intérieur du prolongement creux 8a, c'est-à-dire avec l'intérieur du flacon. Quand la tige arrive en fin de course descendante, il n'y a donc plus de surpression dans la chambre. Mais, la dose est expulsée. Cette communication permet de remplir le flacon à l'origine. Si l'on veut éviter la chute de pression en fin de course, on peut prévoir deux butées de fin de course descendante: une butée formée par le bouton d'actionnement 25, venant s'appliquer contre la capsule 10, pour l'usage normal (Fig. 2) et une autre butée 26 placée dans le fond de la chambre, contre laquelle peut venir le piston quand le bouton 25 est enlevé, et qui permet le dégagement du passage de communication par la rainure 27, pour le remplissage du flacon (voir Fig. 3).

Le dispositif fonctionne de la façon suivante. Quand la valve-pompe est prête à fonctionner, elle est sertie sur le flacon rempli par exemple aux trois-quarts d'un produit liquide à atomiser, surmonté d'azote à une pression de 5 à 6 bars par exemple. Sous l'effet de la pression, le liquide emplit tout le dispositif, éventuellement après amorçage, obtenu en donnant quelques coups de pompe sur le bouton 25, comme on le comprendra dans la description qui suit. La chambre doseuse 7 est remplie de liquide à la pression de l'azote. Le piston 4 est appliqué contre le joint 9 par la pression et la surépaisseur 3 de la tige 1 est appliquée contre le bord intérieur de l'ouverture du joint 9 par le ressort 20.

Quand l'utilisateur veut délivrer une dose de produit, il enfonce le bouton poussoir, par conséquent la soupape 1 descend. Au début, la chambre doseuse 7 n'est pas fermée, puisqu'il y a une communication par le trou 15. La pression dans la chambre est celle du gaz. La soupape 1 comprime d'abord le ressort jusqu'à ce que la force de celui-ci équilibre la pression. Au repos, la pression dans la chambre est normalement supérieure à la force du ressort, pour que le piston soit appuyé contre le joint 9. Quand les forces sont en équilibre, le piston 2 descend avec la tige 1, qui l'entraîne par l'intermédiaire du ressort, jusqu'à ce que le bas de la tige vienne obturer le trou 15 du joint annulaire 16. A ce moment, la chambre doseuse 7 est fermée et, comme le liquide qu'elle renferme est incompressible, la pression dans la chambre monte rapidement, le piston s'arrête et la tige de soupape continue seule son mouvement de descente jusqu'à ce que le passage radial 23 soit dégagé. La compression du ressort atteint alors une valeur élevée. Ensuite, le piston est entraîné avec la soupape, ce qui chasse le liquide par le passage 23 et le canal central 22 pour le pulvériser dans le bouton poussoir. La continuation du mouvement de descente de la soupape a pour effet de chasser une dose de produit de volume précis, jusqu'à ce que le bouton 25 bute sur le dessus de la capsule 10 (Fig. 2).

Quand on cesse d'appuyer sur le bouton poussoir, la tige de soupape remonte sous la poussée du ressort 20. Du fait de l'abaissement de la pression, et surtout sous l'action du ressort 4, le piston 2 ne suit pas le mouvement de la soupape 1 et obture ainsi immédiatement le passage 23. En l'absence du ressort 4, le piston peut adhérer à la tige, par exemple par suite de déformation ou de gonflement du piston 2, par exemple par action du liquide renfermé dans le flacon. Le piston peut alors remonter avec la tige, et comme le passage 23 est dégagé la chambre se remplit d'air. Ceci conduit à un mauvais fonctionnement ultérieur et à une pollution du liquide dans le flacon. La tige 1 remonte seule, et le piston reste en bas jusqu'à ce que la section réduite 18 s'engage dans l'ouverture centrale 15 du joint annulaire 16. Ceci est possible car la tige de soupape est entièrement lisse en dessous du piston; elle ne comporte aucun épaulement qui puisse entraîner le piston vers le haut. La chambre doseuse est alors ouverte et se remplit du liquide à pulvériser, sous l'effet de la dépression due à la remontée, et de la pression du gaz, qui chasse alors le piston vers le haut jusqu'à venir en butée contre le joint 9, retrouvant ainsi l'état initial.

Pour le remplissage initial, on enlève le bouton 25 et l'on descend la tige à fond, ce qui place la rainure dans la position de la figure 3. On peut ainsi remplir le flacon.

Un tel dispositif est utile dans toutes les applications où la précision du dosage est importante, notamment pour les applications pharmaceutiques. Le dispositif est simple, donc fiable et d'un prix de revient et de fabrication relativement bon marché.

En variante, le ressort 20 peut être disposé dans la chambre de compression. Par exemple, le joint 16 du fond de la chambre pourrait être disposé au fond du prolongement 8a du corps de valve et la tige d'actionnement 1 être assez longue pour traverser ce joint et commander, dans les mêmes conditions qec dans l'exemple ci-dessus, l'ouverture ou l'obturation de la chambre de dosage.

## Revendications

1.- Dispositif de projection de doses précises d'un produit liquide, notamment un produit liquide à atomiser pour former un aérosol du type comportant une pompe à piston prévue pour être montée sur un récipient pressurisé, en vue de recevoir un volume du liquide à atomiser et une charge de gaz suffisante pour occuper tout le volume du récipient avec une pression supérieure à la pression atmosphérique, comportant un corps de valve (8) contenant une chambre de dosage cylindrique (7) dans laquelle est logé un piston (2) monté à mouvement perdu sur une tige de soupape (1), un bouton-poussoir (25) d'actionnement du dispositif monté sur la tige de soupape traversant de part en part la chambre doseuse, et comprenant un épaulement (3), formé sur la tige, qui sert à entraîner le piston, l'extrémité interne de la soupape étant formée avec un rétreint (18) passant dans l'ouverture centrale (15) de la chambre, de façon que pour une position relevée de la soupape, l'ouverture (15) ne soit pas obturée et pour une position abaissée de la soupape l'ouverture (15) soit fermée de façon étanche, l'extrémité externe de la soupape étant creuse sur une certaine longueur de façon à former un canal axial borgne (22) communiquant avec l'extérieur par un passage radial (23), situé à un niveau tel que ce passage soit obturé par le piston pour une position abaissée du piston et dégagé pour une position haute du piston, le déplacement du piston nécessaire pour dégager le passage étant supérieur au déplacement de la tige nécessaire pour obturer le fond de la chambre, caractérisé en ce qu'un ressort (4) est prévu entre le piston (2) et l'épaulement formé sur la tige, le ressort sollicitant le piston vers la position d'obturation du passage radial (23).

2.- Dispositif de projection selon la revendication 1, caractérisé en ce que la chambre de dosage (7) est une pièce distincte du corps de valve et est logée à l'intérieur de celui-ci.

3.- Dispositif selon la revendication 1, caractérisé en ce que la tige de soupape (1) comporte une rainure longitudinale (27) à un emplacement tel que, quand la tige (1) est enfoncée complètement, c'est-à-dire quand le piston vient s'appliquer sur une butée (26) maintenant le piston à un écart du fond de la chambre de dosage (7), la rainure (27) est située au niveau du fond de la chambre et établit une communication entre les deux faces du joint d'étanchéïté (16) du fond de la chambre.

4.- Dispositif selon la revendication 3, caractérisé en ce que le bouton-poussoir (25) d'actionnement du dispositif a une dimension telle, et la longueur de la tige de soupape est telle, que, quand le bouton (25) est mis en place sur la tige de soupape (1), le bouton vient en butée sur la surface extérieure (10) de la soupape en limitant la course de la tige pour que la cavité (27) ne parvienne pas jusqu'au joint (16) du fond de la chambre de dosage (7).

## Patentansprüche

1. Vorrichtung zum Versprühen von präzisen Dosen eines flüssigen Produkts, insbesondere eines zu zerstäubenden flüssigen Produkts zur Bildung eines Aerosols, die eine Kolbenpumpe aufweist, welche auf einem unter Druck stehenden Behälter aufsetzbar ist, im Hinblick auf die Aufnahme einer zu zerstäubenden Flüssigkeitsmenge und einer Gasmenge, die ausreicht um im gesamten Behälterraum einen Druck herzustellen, der größer als der atmosphärische Druck ist und die einen Ventilkörper (8) mit einer zylindrischen Dosierkammer (7) aufweist, in der ein Kolben (2) mit einem toten Gang an einem Ventilstab (1) angeordnet ist, wobei ein Druckknopf (25) zur Betätigung der Vorrichtung an dem die Dosierkammer ganz durchsetzenden Ventilstab angeordnet ist, an dem auch eine Schulter (3) vorgesehen ist, die zum Antrieb des Kolbens dient, während das innere Ende des Ventils mit einer Nut (18) versehen ist, die sich in die zentrale Öffnung (15) der Kammer derart erstreckt, daß in angehobener Stellung des Ventils die Öffnung (15) nicht verschlossen ist und in abgesenkter Stellung des Ventils die Öffnung (15) dicht verschlossen ist, wobei das äußere Ende des Ventils über eine bestimmte Länge hohl ist, so daß ein axialer Blindkanal (22) besteht, der mit der Umgebung über einen radialen Kanal (23) in Verbindung steht, der auf einer derartigen Höhe angeordnet ist, daß dieser Kanal vom Kolben in der abgesenkten Kolbenstellung verschlossen und in der angehobenen Kolbenstellung freigegeben ist, wobei die erforderliche Kolbenverschiebung zum Freigeben des Kanals größer ist als die Stabverschiebung zum verschließen des Kammerbodens, dadurch gekennzeichnet, daß zwischen dem Kolben (2) und der auf dem Stab angeordneten Schulter eine Feder (4) vorgesehen ist, die den Kolben in Richtung seiner Verschlußstellung für den radialen Kanal (23) beaufschlagt.

2. Vorrichtung nach Anspruch 1, dadurch gekennzeichnet, daß die Dosierkammer (7) ein vom Ventilkörper getrenntes Teil ist und in seinem Inneren angeordnet ist.

3. Vorrichtung nach Anspruch 1, dadurch gekennzeichnet, daß der Ventilstab (1) eine Längsnut (27) an einer derartigen Stelle aufweist, daß bei vollständig eingedrücktem Stab (1), d.h. wenn der Kolben sich auf einem Anschlag (26) abstützt, der den Kolben in einem Abstand vom Boden der Dosierkammer (7) hält, die Nut (27) sich auf Höhe des Kammerbodens befindet und eine Verbindung zwischen den beiden Seiten der Dichtung (16) des Kammerbodens herstellt.

4. Vorrichtung nach Anspruch 3, dadurch gekennzeichnet, daß der Druckknopf (25) zur Betätigung der Vorrichtung eine derartige Abmessung und der Ventilstab eine derartige Länge aufweist, daß, wenn der Knopf (25) auf den Ventilstab (1) aufgesetzt ist, der Knopf sich auf der Außenfläche (10) des Ventils abstützt und so den Weg des Stabes begrenzt, so daß die Aussparung (27) nicht bis zur Dichtung (16) für den Boden der Kammer (7) reicht.

**Claims**

1. Device for delivering precise doses of a liquid product, in particular a liquid product which is to be atomised to form an aerosol, of the kind comprising a piston pump arranged so as to be mounted on a pressurised container, for the purpose of receiving a volume of the liquid which is to be atomised and a gas charge sufficient to occupy the whole volume of the container with a higher pressure than atmospheric pressure, comprising a valve member (8) containing a cylindrical dosing chamber (7) in which is housed a piston (2) mounted with lost motion on a valve stem (1), a push-button (25) for actuation of the device mounted on the valve stem passing through the dosing chamber from side to side and comprising a shoulder (3) formed on the stem, which serves to drive the piston, the inner extremity of the valve being formed with a constriction (18) passing into the central opening (15) of the chamber, in such a manner that for a raised position of the valve, the opening (15) is not shut off and for a lowered position of the valve, the opening (15) is shut off in hermetic manner, the outer extremity of the valve being hollow over a particular length in such manner as to form a blind axial passage (22) communicating with the outside via a radial passage (23) situated at a level such that this passage is closed off by the piston at a lowered position of the piston and uncovered at a high position of the piston, the displacement of the piston necessary to uncover the passage being greater than the displacement of the stem required to shut off the bottom of the chamber, characterised in that a spring (4) is provided between the piston (2) and the shoulder formed on the stem, the spring impelling the piston towards the closed off position of the radial passage (23).

2. Delivery device according to claim 1, characterised in that the dosing chamber (7) is an element separate from the valve member and is housed within the same.

3. Device according to claim 1, characterised in that the valve stem (1) has a longitudinal groove (27) at a position such that, when the stem (1) is wholly moved in, that is to say when the piston is applied against a stop (26) maintaining the piston at a distance from the bottom of the dosing chamber (7), the groove (27) is situated at the level of the bottom of the chamber and establishes a communication between the two surfaces of the sealing joint (16) of the bottom of the chamber.

4. Device according to claim 3, characterised in that the push-button (25) for actuation of the device has a size such, and the length of the valve stem is such, that, when the button (25) is placed in position on the valve stem (1), the button comes up against the outer surface (10) of the valve thus limiting the stroke of the stem so that the cavity (27) does not reach the joint (16) of the bottom of the dosing chamber (7).

Fig.1

*Fig.2*

*Fig.3*